# EUROPÄISCHE PATENTANMELDUNG

(11) **EP 4 033 227 A1**
(43) Veröffentlichungstag der Anmeldung: **27.07.2022**
(21) Anmeldenummer: 22152430.9
(22) Anmeldetag: 20.01.2022
(51) Int. Cl.: G01N 21/88, G01N 21/95

(54) **VERFAHREN ZUR OPTISCHEN DETEKTION VON FEHLERN IN KERAMISCHEN ARTIKELN**

(30) Priorität: 20.01.2021 DE 102021101155
(71) Anmelder: Lippert GmbH & Co. KG, 92690 Pressath (DE)
(72) Erfinder: KLEVTSOV, Valery Alexeevich, Saint Petersburg 196602 (RU); GRADMANN, Michael, 92690 Pressath (DE)
(74) Vertreter: Louis Pöhlau Lohrentz

(57) **Zusammenfassung**

Vorgeschlagen wird ein Verfahren zur optischen Detektion von Fehlern in keramischen Artikeln (2), wobei eine Lichtquellen (3) den keramischen Artikel (2) beleuchten, und wobei eine Kamera (4) als Zeilenkamera ausgebildet ist und zur Detektion von Fehlern im keramischen Artikel (2) bei einer Bildaufnahme eine Zeile (9) des keramischen Artikels (2) aufnimmt, und wobei der keramische Artikel (2) auf einer Fördereinheit derart transportiert wird, dass die Kamera (4) für ein Bild mehrere Zeilen (9) des keramischen Artikels (2) aufnimmt, und wobei eine elektronische Steuereinrichtung (6) die Kamera (4) und/oder die Fördereinheit steuert und eine Auswerteeinrichtung (7) die aufgenommenen Bilder auswertet. Wesentlich dabei ist, dass die Kamera (4) mehrere Bilder in unterschiedlichen Beleuchtungssituationen des Artikels (2) nacheinander aufnimmt, und die elektronische Steuereinrichtung (6) die mehreren Lichtquellen (3) unabhängig voneinander steuert, um die unterschiedlichen Beleuchtungssituationen des keramischen Artikels (2) zu erzeugen.

## Beschreibung

Die Erfindung betrifft ein Verfahren zur optischen Detektion von Fehlern in keramischen Artikeln nach den Merkmalen des Oberbegriffs des Anspruchs 1.

Beim Herstellen keramischer Körper können unterschiedliche Fehler auftreten. Dabei kann es sich beispielsweise um Verfärbungen, Flecken, Glasurfehler, Risse, Beschädigungen, Anhaftungen oder Formabweichungen handeln. Die Fehler können ein völlig unterschiedliches optisches Erscheinungsbild aufweisen. In der Praxis wird deshalb wird das Geschirr in verschiedene Qualitätsstufen eingeteilt. Diese sogenannte Sortierung erfolgt dabei in unterschiedlichen Kategorien. Bei aktuellen Verfahren erfolgt eine Sichtprüfung per Hand aller Produkte und daraufhin eine Beurteilung durch eine prüfende Person. Eine derartige Prüfung durch eine Person unterliegt zum Teil großen individuellen Schwankungen.

Bei bekannten Vorrichtungen zur automatischen optischen Qualitätskontrolle ist üblicherweise eine möglichst gleichmäßige diffuse Beleuchtung vorgesehen. Bei einer solchen Beleuchtungssituation können Fehler bei unterschiedlichen keramischen Artikeln, beispielsweise bei unterschiedlicher Form, Muster oder Farbe, nicht zuverlässig erkannt werden. In derartigen Systemen muss die Maschine zudem für jede unterschiedliche Form, Muster oder Farbe des keramischen Artikels die Fehler anhand zahlreicher Gutteile neu lernen.

Aus der EP 1 049 925 A1 ist ein System zur optischen Inspektion von Oberflächen bekannt. Es wird mit einer CCD-Kamera und mit zwei Lichtquellen gearbeitet. Ein Lichtstrahl wird reflektiert und ein Lichtstrahl wird durch das zu prüfende Objekt geleitet, um Fehler zu erkennen.

Die WO 2010/052431 A1 zeigt eine Vorrichtung zur optischen Inspektion von Etiketten auf Paketen. Über ein Förderband werden Pakete an einer Kamera vorbei transportiert. Als Kamera wird eine Zeilenkamera verwendet. Um etwaige Fehler zu erkennen erfolgt eine Beleuchtung mit polarisiertem Licht, welches mittels Fresnel-Linsen geleitet wird.

Der vorliegenden Erfindung liegt die Aufgabe zugrunde, ein Verfahren und eine Vorrichtung bereitzustellen, welche eine schnellere, präzisere, zuverlässigere und günstigere Fehlererkennung des keramischen Körpers ermöglicht. Insbesondere soll die Prüfung reproduzierbare Ergebnisse liefern und keinen Schwankungen bei der Fehlererkennung von unterschiedlichen keramischen Artikeln unterliegen.

Die Aufgabe wird erfindungsgemäß durch ein Verfahren zur optischen Detektion von Fehlern in keramischen Artikeln nach den Merkmalen des Anspruchs 1 gelöst.

Erfindungsgemäß wird ein Verfahren zur optischen Detektion von Fehlern in keramischen Artikeln, insbesondere keramischem Geschirr oder Porzellan vorgeschlagen, umfassend die Bereitstellung mehrerer Lichtquellen, einer Kamera, , einer Fördereinheit zum Transport eines zu prüfenden keramischen Artikels, einer elektronischen Steuereinrichtung und einer Auswerteeinrichtung, wobei die Lichtquellen den keramischen Artikel beleuchten, und wobei die Kamera als Zeilenkamera ausgebildet ist und zur Detektion von Fehlern im keramischen Artikel bei einer Bildaufnahme eine Zeile des keramischen Artikels aufnimmt, und wobei der keramische Artikel auf der Fördereinheit derart transportiert wird, dass die Kamera für ein Bild mehrere Zeilen des keramischen Artikels aufnimmt, und wobei die elektronische Steuereinrichtung die Kamera und/oder die Fördereinheit steuert und die Auswerteeinrichtung die aufgenommenen Bilder auswertet. Wesentlich dabei ist, dass die Kamera mehrere Bilder in unterschiedlichen Beleuchtungssituationen des Artikels nacheinander aufnimmt, und die elektronische Steuereinrichtung die mehreren Lichtquellen unabhängig voneinander steuert oder schaltet, um die unterschiedlichen Beleuchtungssituationen des keramischen Artikels zu erzeugen.

Insbesondere bedeutet unabhängig voneinander steuern oder schalten, dass nur eine einzige der mehreren Lichtquellen den keramischen Artikel beleuchtet, oder dass zwei oder mehr, aber nicht alle der mehreren Lichtquellen den keramischen Artikel gleichzeitig beleuchten. Es kann auch vorgesehen sein, dass in einer Beleuchtungssituation mehrere oder alle der mehreren Lichtquellen den keramischen Artikel beleuchten. Vorzugsweise sind die Lichtquellen dazu schaltbar, insbesondere einzeln schaltbar oder in Gruppen schaltbar ausgebildet.

Die unterschiedlichen Beleuchtungssituationen der mehreren Lichtquellen ermöglichen es, keramische Artikel mit hoher Präzision auf Fehler zu überprüfen. Durch die unterschiedlichen Beleuchtungssituationen können beispielsweise Spiegelungen an der Oberfläche des keramischen Artikels vermieden oder erzeugt werden. Weiter ist es beispielsweise möglich, den keramischen Gegenstand auch an Flanken, wie beispielsweise einem Fuß, zu beleuchten. Durch die unterschiedlichen Beleuchtungssituationen können somit auch stark gekrümmte Oberflächen auf Fehler überprüft werden. Eine Einteilung in verschiedene Qualitätsstufen kann damit automatisiert und ohne Qualitätsschwankungen der Prüfung erfolgen.

Vorzugsweise kann die Kamera als CCD-Kamera mit zweidimensionalem Sensor ausgebildet sein.

In einer vorteilhaften Ausgestaltung kann die Kamera als Zeilenkamera mit einem Zeilensensor ausgebildet sein. Ein Vorteil einer Zeilenkamera ist die schnelle Auslesezeit und die höhere Pixelzahl der Zeile, verglichen mit Kameras mit zweidimensionalen Sensoren.

Es kann vorgesehen sein, dass die Lichtquellen den keramischen Artikel telezentrisch und/oder diffus beleuchten. Telezentrische Beleuchtung des keramischen Artikels bedeutet, dass die Lichtquelle mittels eines telezentrischen Strahlengangs auf dem keramischen Artikel abgebildet wird. Der keramische Artikel wird bei der telezentrischen Beleuchtung mit parallelen Strahlen beleuchtet, d.h. die Lichtstrahlen treffen im gleichen Einfallswinkel auf dem keramischen Artikel auf. Bei der diffusen Beleuchtung kann vorgesehen sein, dass mehrere diffuse Lichtquellen ausgebildet sind.

Es sind unterschiedliche Ausgestaltungen bzw. Konstellationen oder Anordnungen von Lichtquelle und Kamera zur optischen Detektion von Fehlern möglich, ohne den Rahmen der Erfindung zu verlassen.

In einer Ausgestaltung kann vorgesehen sein, dass der keramische Artikel telezentrisch beleuchtet wird und nicht telezentrisch detektiert wird, oder dass der keramische Artikel nicht telezentrisch beleuchtet wird und telezentrisch detektiert wird, oder dass der keramische Artikel telezentrisch beleuchtet wird und telezentrisch detektiert wird.

Es kann vorgesehen sein, dass die optische Fehlererkennung im laufenden Betrieb, das heißt während der laufenden Fertigung von keramischen Artikeln bzw. Geschirrteilen durchgeführt wird. Die zu prüfenden keramischen Artikel bzw. Geschirrteile können manuell oder automatisch, beispielsweise durch einen Roboterarm, der Fördereinheit bzw. dem Förderband zugestellt werden. Die Fördereinheit bzw. das Förderband transportiert die zu prüfenden keramischen Artikel bzw. Geschirrteile an der Zeilenkamera vorbei, wobei diese, durch die Steuereinrichtung gesteuert, eine oder mehrere Bildaufnahmen eines zu prüfenden Teiles macht. Über eine Auswerteeinrichtung werden die Bildaufnahmen ausgewertet und auf das Vorhandensein von Fehlern geprüft. Im Falle eines Fehlers steuert die Steuereinrichtung und/oder Auswerteeinrichtung beispielsweise eine visuelle Anzeige an, um den Fehler anzuzeigen. Es kann auch vorgesehen sein, dass die Steuereinrichtung und/oder Auswerteeinrichtung die Fördereinheit ansteuert, um das fehlerhafte Teil aus dem Produktstrom auszuschleusen. Vorzugsweise kann die Steuereinrichtung und/oder Auswerteeinrichtung einen nach (stromab) der Kamera angeordneten Roboterarm ansteuern, um ein fehlerhaftes Teil von der Fördereinheit zu entnehmen.

Bei der Qualität der optischen Fehlererkennung hat sich gezeigt, dass der Art der Beleuchtung eine tragende Rolle zukommt. Eine Verwendung einer telezentrischen Beleuchtung und/oder telezentrischen Detektion hat bei den zu prüfenden keramischen Artikeln bzw. Geschirrteile mit ihren gekrümmten und teils stark glänzenden Oberflächen zu guten Ergebnissen geführt.

Es kann vorgesehen sein, dass die Lichtquelle zur telezentrischen Beleuchtung mehrere Strahlungsquellen aufweist. Vorzugsweise sind die mehreren Strahlungsquellen der telezentrischen Beleuchtung in zwei Reihen nebeneinander angeordnet, vorzugsweise entsprechend der linearen Detektion der Kamera. Es kann vorgesehen sein, dass die mehreren Strahlungsquellen der ersten Reihe räumlich versetzt nebeneinander zu den mehreren Strahlungsquellen der zweiten Reihe ausgebildet sind. Vorzugsweise sind die erste Reihe und die zweite Reihe in einem Winkel zueinander angeordnet, um trotz des räumlichen Versatzes nebeneinander den keramischen Artikel auf einer Linie zu beleuchten.

Vorzugsweise kann vorgesehen sein, dass der keramische Artikel zusätzlich zur telezentrischen Beleuchtung durch eine diffuse Lichtquelle beleuchtet wird. Dadurch kann bspw. je nach Reflexionsverhalten des zu prüfenden Körpers der Kontrast des aufgenommenen Bildes verbessert werden.

Es kann vorgesehen sein, dass die telezentrische Lichtquelle und/oder dass die diffuse Beleuchtung schaltbar ist bzw. sind.

Insbesondere ist vorgesehen, dass die Lichtquelle oder die mehreren Strahlungsquellen LEDs (Leuchtdioden) aufweist. Die LEDs können hinsichtlich ihrer Intensität und/oder Leuchtdauer und/oder Lichttemperatur bzw. Lichtfarbe schaltbar sein.

Es kann vorgesehen sein, dass die Lichtquelle zur telezentrischen Beleuchtung mehrere Strahlungsquellen aufweist. Vorzugsweise sind die mehreren Strahlungsquellen der telezentrischen Beleuchtung in zwei Reihen nebeneinander angeordnet, vorzugsweise entsprechend der linearen Detektion der Kamera. Es kann vorgesehen sein, dass die mehreren Strahlungsquellen der ersten Reihe räumlich versetzt nebeneinander zu den mehreren Strahlungsquellen der zweiten Reihe ausgebildet sind. Vorzugsweise sind die erste Reihe und die zweite Reihe in einem Winkel zueinander angeordnet, um trotz des räumlichen Versatzes nebeneinander den keramischen Artikel auf einer Linie zu beleuchten.

Vorzugsweise kann vorgesehen sein, dass die Lichtquellen den keramischen Artikel aus unterschiedlichen Winkeln, insbesondere von oben und/oder unten und/oder der Seite beleuchten. Der Vorteil einer Beleuchtung von unterschiedlichen Seiten und unter unterschiedlichen Winkeln ist, dass auch stark gekrümmte Bereiche oder steigende Kanten beleuchtet werden können.

Insbesondere kann vorgesehen sein, dass eine oder mehrere Lichtquellen als lichtemittierende Komponenten Halbleiterdioden (LED) und/oder Gasentladungslampen aufweist. Es kann vorgesehen sein, dass die Lichtquellen unterschiedliche Wellenlängenbereiche, oder Wellenlängen abstrahlen. Dadurch ist es möglich, dass die Auswerteeinrichtung verschiedene Fehler unterschiedlich erkennt und diese dadurch eindeutig zuordnen kann

Beispielsweise kann vorgesehen sein, dass mindestens 4 oder 6 telezentrisch Lichtquellen den keramischen Artikel unabhängig voneinander oder zusammen beleuchten, und/oder dass mindestens 9 oder 18 oder 27 oder 36 diffuse Lichtquellen unabhängig voneinander oder zusammen beleuchten.

Es kann vorgesehen sein, dass der Zeilenerfassungsbereich der Kamera kleiner gleich 300µm, vorzugsweise kleiner gleich 200µm, höchst vorzugsweise kleiner gleich 150µm beträgt. Dabei überdeckt der Zeilenerfassungsbereich die Breite des keramischen Körpers vollständig, d.h. an der breitesten Stelle, die Länge ist auf kleiner gleich 300µm, vorzugsweise kleiner gleich 200µm, höchst vorzugsweise kleiner gleich 150µm begrenzt. Vorzugsweise wird unter Zeilenerfassungsbereich derjenige Bereich eines zu prüfenden keramischen Artikels verstanden, der bei einer Bildaufnahme auf den Kamerasensor projiziert wird.

Vorzugsweise kann vorgesehen sein, dass bei der Bildaufnahme einer Zeile eine Aufnahmeserie mit mehreren Bildern derselben Zeile aufgenommen wird, wobei sich die einzelnen Bilder der Aufnahmeserie in der Beleuchtungssituation unterscheiden. Dabei kann vorgesehen sein, dass die Aufnahmeserie, d.h. die unterschiedlichen Beleuchtungssituationen derart schnell durchgeschalten werden, dass immer dieselbe Zeile, oder annähernd dieselbe Zeile, durch die Linienkamera aufgenommen wird. Vorzugsweise werden alle Beleuchtungssituationen, oder die Beleuchtungssituationen der Lichtquellen innerhalb des Zeilenerfassungsbereichs geschalten. Annähernd bedeutet hier, dass sich der zu prüfende Artikel kontinuierlich in Förderrichtung weiterbewegt und dadurch auch bei einer schnellen Bildaufnahme mit mehreren Bildern eine minimale Bewegung des keramischen Artikels vorhanden ist.

Es kann insbesondere vorgesehen sein, dass die mehreren Bilder einer Aufnahmeserie in einer Zeile derart schnell nacheinander aufgenommen werden, dass der keramischen Artikel in der für die Aufnahme all dieser mehreren Bilder notwendigen Zeitdauer um weniger als den Zeilenerfassungsbereich weitertransportiert wird. Dies kann erreicht werden, indem der keramische Artikel mit entsprechender Geschwindigkeit auf der Fördereinheit kontinuierlich transportiert wird. Alternativ kann das Transportband den keramischen Artikel schrittweise transportieren, wobei die Schritte mit den Bildaufnahmen synchronisieret sind.

Es kann vorgesehen sein, dass eine Aufnahmeserie mindestens 2 Bilder umfasst, vorzugsweise mindestens 15 Bilder oder mindestens 30 Bilder umfasst. Es ist auch denkbar, dass eine Aufnahmeserie aus einer bestimmten Anzahl von Aufnahmen im Bereich zwischen 2 und 15, oder zwischen 2 und 32 Bildern besteht.

Vorzugsweise werden alle Beleuchtungssituationen, oder die Beleuchtungssituationen der lichtemittierende Halbleiterdioden oder/und die Beleuchtungssituationen der diffusen Lichtquellen innerhalb eines Zeilenerfassungsbereich geschalten. Das bedeutet, dass bei einer Aufnahmeserie von 15 Bildern jedes Bild eine andere Beleuchtungssituation aufweist. Die Zeilenkamera nimmt dabei pro Zeile 15 Bilder mit jeweils unterschiedlicher Beleuchtungssituation auf. Für die nachfolgende Zeile wiederholt sich die Aufnahmeserie entsprechend, so dass zu dem zu prüfenden Körper am Ende 15 Bilder mit jeweils unterschiedlicher Beleuchtungssituation vorliegen, die durch eine Auswerteeinrichtung ausgewertet werden.

Es kann vorgesehen sein, dass zur Aufnahme der Aufnahmeserie einer Zeile die Lichtquellen synchron zu den mehreren Bildern der Aufnahmeserie sequentiell geschaltet werden, um den keramischen Artikel derart zu beleuchten, dass je Bild der Aufnahmeserie eine unterschiedliche Beleuchtungssituation erzeugt wird.

Es kann vorgesehen sein, dass mehrere Zeilen aufeinanderfolgend aufgenommen werden, um den gesamten keramischen Artikel aufzunehmen. Es kann auch vorgesehen sein, dass mehrere Zeilen und für jede Zeile die Aufnahmeserie aufeinanderfolgend aufgenommen werden, um den gesamten keramischen Artikel in einer Aufnahmeserie umfassend mehrere Bilder mit jeweils unterschiedlichen Beleuchtungssituationen aufzunehmen. Die Aufnahme mehrerer Zeilen und für jede Zeile jeweils eine Aufnahmeserie kann als Matrix in der Form n Zeilen mit m Beleuchtungssituationen verstanden werden.

Es kann vorgesehen sein, dass die Aufnahme durchgehend erfolgt, wobei ein Array an Bildern ausgegeben oder ausgelesen wird, vorzugsweise jeweils mit einer eigenen Beleuchtungssituation.

Es kann vorgesehen sein, dass die durchgehende Aufnahme erfolgt, so lange der zu prüfende Artikel im Aufnahmebereich angeordnet ist. Vorzugsweise startet und/oder endet die Aufnahme durch einen Sensor, vorzugsweise eine Lichtschranke.

Insbesondere wird der zu prüfende Artikel von der Fördereinheit kontinuierlich transportiert. Die Geschwindigkeit des Transports wird dabei derart angepasst, dass der zu prüfende Artikel während einer Aufnahmeserie einer Zeile um weniger als den Zeilenerfassungsbereich transportiert wird, vorzugsweise um weniger als den halben Zeilenerfassungsbereich transportiert wird. Dadurch wird gewährleistet, dass die mehreren Aufnahmen der Zeilenkamera einer Aufnahmeserie jeweils dieselbe Zeile detektieren.

Es kann vorzugsweise auch vorgesehen sein, dass die Lichtquelle mehrere in Reihen oder Zeilen angeordnete Zeilenmodule umfasst. Die Zeilenmodule können austauschbar an einem Rahmen gehaltert sein. Jedes der Zeilenmodule kann dabei eine Vielzahl nebeneinander angeordneter LEDs aufweisen. Insbesondere beleuchtet ein solches Zeilenmodul den zu prüfenden Körper in einem vorbestimmten Winkel, der sich von dem Beleuchtungswinkel eines benachbarten Zeilenmoduls unterscheidet.

Vorzugsweise kann ein Zeilenmodul in zwei Linien oder Reihen nebeneinander angeordnete Strahlungsquellen, vorzugsweise LEDs, umfassen, wobei die zwei Linien zueinander jeweils um den halben Durchmesser einer Strahlungsquelle versetzt sind. In jeder der Linien oder Reihen sind eine Vielzahl von LEDs nebeneinander angeordnet. Die LEDs sind derart versetzt zueinander angeordnet, dass sich deren Strahlungsbild partiell derart überlappt, dass sich Bereiche unterschiedlicher Strahlungsintensität ausgleichen. Durch diese Anordnung wird eine Bestrahlung einer Linie des zu prüfenden Körpers mit gleichbleibender Intensität ermöglicht. Durch die Beleuchtung einer Strahlungsquelle aus der zweiten Reihe wird das jeweilige Beleuchtungsintensitätsminimum zwischen der Beleuchtung jeder Strahlungsquelle der ersten Reihe ausgefüllt.

Vorzugsweise kann die Lichtquelle eine Linienlichtquelle umfassen, die mit ihrer Längserstreckung quer, also rechtwinklig, zu der Förderrichtung der Fördereinheit angeordnet ist. Es ist auch denkbar, dass mehrere Linienlichtquellen vorgesehen sind, die in unterschiedlichen Winkeln relativ zu der Förderrichtung der Fördereinheit angeordnet sind.

Insbesondere kann die Steuerungseinrichtung mit der Lichtquelle, oder mit den mehreren Zeilenmodulen der Lichtquelle und/oder mit der Vielzahl von LEDs der Lichtquelle verbunden sein, um diese zu steuern oder zu schalten. Die Steuerungseinrichtung kann die LEDs einzeln oder in Gruppen schalten und/oder die Zeilenmodule einzeln und/oder in Gruppen schalten, und/oder deren Lichtintensität und/oder deren Leuchtdauer und/oder deren Lichttemperatur bzw. Lichtfarbe steuern. Insbesondere ist die Steuerungseinrichtung zudem mit der Fördereinheit verbunden, um den zu prüfenden Körper synchron zu der Aufnahme zu transportieren.

Insbesondere kann vorgesehen sein, dass die Auswerteeinrichtung aus den mehreren Zeilen des gesamten keramischen Artikels ein Gesamtbild zusammensetzt, um Fehler im keramischen Artikel zu erkennen, und/oder dass die Auswerteeinrichtung für jede Beleuchtungssituation der Aufnahmeserie aus den mehreren Zeilen des gesamten keramischen Artikels mehrere Gesamtbilder mit jeweils unterschiedlichen Beleuchtungssituationen zusammensetzt, vorzugsweise jeweils ein Gesamtbild für jede Beleuchtungssituation zusammensetzt, und dass die Auswerteeinrichtung anschließend eines oder mehrere oder alle der Gesamtbilder mit unterschiedlichen Beleuchtungssituationen auswertet und/oder miteinander vergleicht, um Fehler im keramischen Artikel zu detektieren.

In einer Ausgestaltung kann vorgesehen sein, dass die detektierten Fehler in einem Speicher erfasst und/oder optisch angezeigt werden. Beim Speicher kann es sich um einen elektronisch beschreibbaren nicht flüchtigen Speicher handeln.

Es kann vorgesehen sein, dass als fehlerhaft erkannte keramische Artikel aus dem Förderstrom der Fördereinheit ausgeschleust werden, oder die keramischen Artikel entsprechend des detektierten Fehlers sortiert werden.

Es kann vorgesehen sein, dass die Fördereinheit als ein Förderband oder ein Verfahrtisch oder ein Riemenband, oder Transportarm, oder Transporteinrichtung ausgebildet ist.

Es kann vorgesehen sein, dass der keramische Artikel vor der Messung von einem Förderband oder einem Verfahrtisch oder einem Riemenband durch den Transportarm abgenommen wird und vorzugsweise nach der Messung auf das Förderband oder den Verfahrtisch oder dem Riemenband abgelegt wird.

In einer Ausgestaltung kann vorgesehen sein, dass die Auswerteeinrichtung mit einem Gesamtbild des keramischen Artikels eine Kantendetektion durchführt, vorzugsweise durch einen Kantenfilter oder Kantendetektor, um Fehler im keramischen Artikel zu erkennen und/oder dass die Auswerteeinrichtung für jedes der Gesamtbilder mit jeweils unterschiedlicher Beleuchtungssituation, vorzugsweise unterschiedlicher diffuser und/oder telezentrischer Beleuchtungssituation, eine Kantendetektion durchführt und diese anschließend miteinander vergleicht, um Fehler im keramischen Artikel zu erkennen und/oder um Reflexionen auf den Bildern des keramischen Artikels zu eliminieren.

Die Kantendetektion trennt flächige Bereiche in einem digitalen Bild. Dies erfolgt durch sogenannte Kantenoperatoren, welche Bereiche erkennen, die sich in Farb- oder Grauwert, oder Helligkeit oder der Textur unterscheiden. Bekannte Kantenoperatoren sind beispielsweise der Sobel-Operator, der Scharr-Operator, der Laplace-Filter oder auch der Kirsch-Operator.

Es kann vorgesehen sein, dass die Auswerteeinrichtung die Gesamtbilder von unterschiedlichen Beleuchtungssituationen miteinander vergleicht, um Fehler im keramischen Artikel zu erkennen. Vorzugsweise können durch den Vergleich mehrerer Gesamtbilder die Reflexionen oder Spiegelungen an der Oberfläche des keramischen Körpers durch die Auswerteeinrichtung eliminiert werden, d.h. vorzugsweise erkennt die Auswerteeinrichtung durch den Vergleich mehrerer Gesamtbilder Reflexionen oder Spiegelungen und ordnet diese nicht als einen Fehler des keramischen Artikels ein.

Es kann vorgesehen sein, dass die Auswerteeinrichtung gespeicherte Gesamtbilder eines fehlerfreien keramischen Artikels mit den erfassten Gesamtbildern des zu prüfenden Artikels vergleicht, um Fehler im keramischen Artikel zu erkennen. Vorzugsweise kann vor der Detektion von Fehlern in keramischen Artikeln die Auswerteeinrichtung durch die Aufnahme von fehlerfreien keramischen Artikeln angelernt werden.

Weitere Ausführungen der Erfindung sind in den Figuren dargestellt und nachfolgend beschrieben. Dabei zeigen:
- Fig. 1:: Eine schematische Darstellung der Vorrichtung zur optischen Detektion;
- Fig. 2a:: Eine schematische Darstellung eines keramischen Artikels und der Bildaufnahme mit zwei Beleuchtungssituationen;
- Fig. 2b:: Erstes Gesamtbild der Bildaufnahme des gesamten keramischen Artikels aus Fig. 2a;
- Fig. 2c:: Zweites Gesamtbild der Bildaufnahme des gesamten keramischen Artikels aus Fig. 2a.

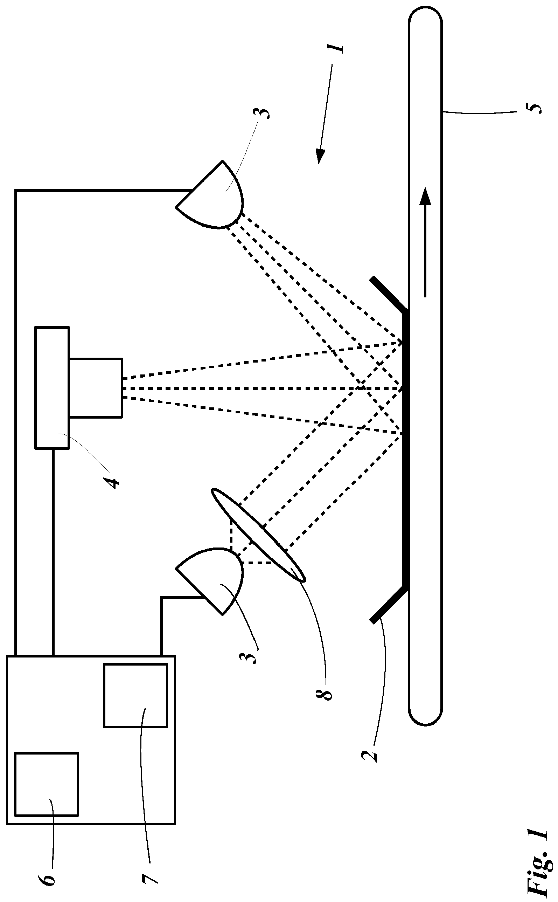

Fig. 1 zeigt die Vorrichtung 1 zur Durchführung des erfindungsgemäßen Verfahrens zur optischen Detektion von Fehlern in keramischen Artikeln 2, umfassend mehrere Lichtquellen 3, eine Kamera 4, einen keramischen Artikel 2, eine Fördereinheit 5, eine elektronische Steuereinrichtung 6 und eine Auswerteeinrichtung 7. Der keramische Artikel 2 wird auf der Fördereinheit 5 in Förderrichtung (Pfeil in Fig. 1) unter den Lichtquellen 3 und der Kamera 4 hindurchgeführt. Im Ausführungsbeispiel der Fig. 1 ist die Fördereinheit 5 als Förderband ausgebildet.

Die Lichtquelle 3 beleuchtet den keramischen Artikel 2. Im Ausführungsbeispiel der Fig. 1 sind zwei Lichtquellen 3 ausgebildet, wobei zwischen der linken ersten Lichtquelle 3 und dem keramischen Artikel 2 ein optisches Bauteil 8, beispielsweise eine Linse, angeordnet ist, um den keramischen Artikel 2 telezentrisch zu beleuchten. Die rechte zweite Lichtquelle 3 bestrahlt den keramischen Artikel 2 mit diffusem Licht. Die beiden Lichtquellen 3 in Fig. 1 können separat angesteuert werden und erzeugen dabei unterschiedliche Beleuchtungssituationen, d.h. eine erste Beleuchtungssituation durch die Beleuchtung des keramischen Artikels 2 mit der ersten Lichtquelle 3 und eine zweite Beleuchtungssituation durch die Beleuchtung des keramischen Artikels 2 mit der zweiten Lichtquelle 3.

Die Kamera 4 nimmt Bilder des keramischen Artikels 2 auf. Die elektronische Steuereinrichtung 6 und die Auswerteeinrichtung 7 sind im Ausführungsbeispiel der Fig. 1 in einer gemeinsamen Anlage ausgebildet und sind sowohl mit der Lichtquelle 3 als auch der Kamera 4 verbunden, um diese zu steuern und um Bilder und Informationen aus der Kamera 4 auszulesen.

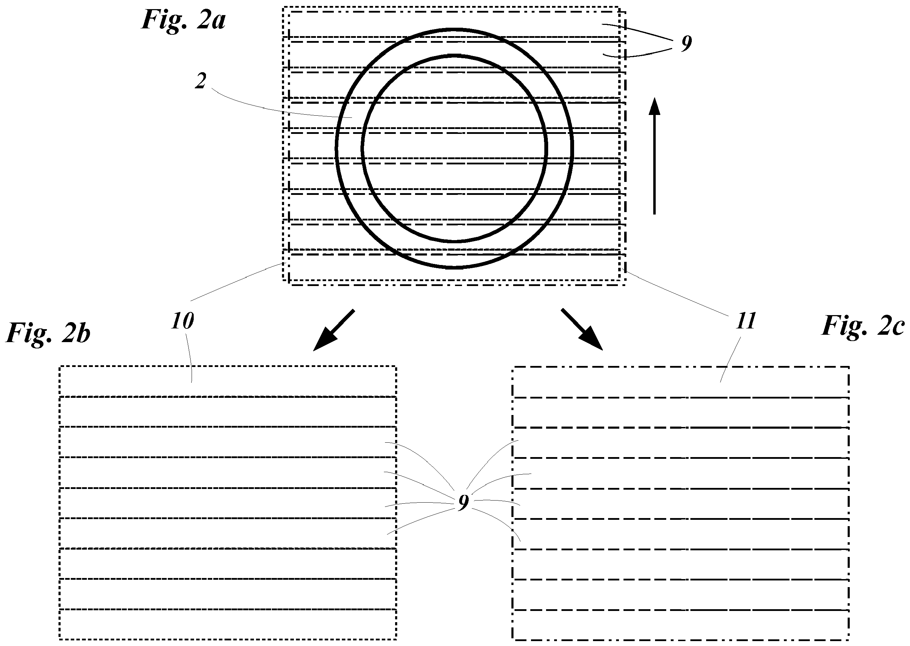

Wie in Fig. 2 dargestellt, werden mehrere Zeilen 9 des keramischen Körpers 2 aufgenommen und ausgewertet. Die Aufnahme einer Zeile 9 erfolgt durch die Beleuchtung der ersten oder zweiten Lichtquelle 3 und der Aufnahme eines Bildes durch die Kamera 4. Wie in Fig. 2a dargestellt, wird eine Aufnahmeserie jeder Zeile mit jeweils zwei Bildern derselben Zeile aufgenommen, ein erstes Bild mit der ersten Beleuchtungssituation und ein zweites Bild mit der zweiten Beleuchtungssituation. D.h. jede Zeile 9 wird mit den zwei verschiedenen Beleuchtungssituationen aufgenommen, der ersten Beleuchtungssituation durch die linke erste Lichtquelle 3 in Fig. 1 und der zweiten Beleuchtungssituation durch die rechte zweite Lichtquelle 3 in Fig. 1.

Bei diesem Ausführungsbeispiel der Fig. 2a entsprechen die Positionen des jeweils ersten und zweiten Bildes einer Zeile annähernd, weisen aber einen kleinen Versatz zueinander auf, welcher durch das kontinuierliche Weiterbewegen des keramischen Artikels in die Förderrichtung (Pfeil in Fig. 2a) entsteht. Der Versatz der Zeilen 9 nach links und rechts in Fig. 2a ist nur schematisch, um die Zeilen 9 besser zu erkennen.

Wie in den Fig. 2a, 2b und 2c dargestellt, wird jede Zeile 9 unter unterschiedlichen Beleuchtungssituationen aufgenommen. Die Auswerteeinrichtung 7 setzt aus den mehreren Zeilen und Bildern des gesamten keramischen Artikels jeweils ein Gesamtbild zusammen, das erste Gesamtbild 10, welches den keramischen gesamten Artikel 2 unter der ersten Beleuchtungssituationen darstellt, und das zweite Gesamtbild 11, welches den gesamten keramischen Artikel 2 unter der zweiten Beleuchtungssituationen darstellt. Anschließend kann die Auswerteeinrichtung das erste Gesamtbild 10 und das zweite Gesamtbild 11 getrennt auswerten oder miteinander vergleichen und den Vergleich auswerten.

### Bezugszeichenliste

- 1: Vorrichtung zur optischen Detektion von Fehlern in keramischen Artikeln
- 2: keramischer Artikel
- 3: Lichtquelle
- 4: Kamera
- 5: Fördereinheit
- 6: Steuereinrichtung
- 7: Auswerteeinrichtung
- 8: optisches Bauteil
- 9: Zeile
- 10: erstes Gesamtbild
- 11: zweites Gesamtbild

## Patentansprüche

1. Verfahren zur optischen Detektion von Fehlern in keramischen Artikeln (2), insbesondere keramischem Geschirr oder Porzellan,
umfassend die Bereitstellung mehrerer Lichtquellen (3), einer Kamera (4), einer Fördereinheit zum Transport eines zu prüfenden keramischen Artikels (2), einer elektronischen Steuereinrichtung (6) und einer Auswerteeinrichtung, wobei die Lichtquellen (3) den keramischen Artikel (2) beleuchten, und wobei die Kamera (4) als Zeilenkamera ausgebildet ist und zur Detektion von Fehlern im keramischen Artikel (2) bei einer Bildaufnahme eine Zeile (9) des keramischen Artikels (2) aufnimmt, und
wobei der keramische Artikel (2) auf der Fördereinheit derart transportiert wird, dass die Kamera (4) für ein Bild mehrere Zeilen (9) des keramischen Artikels (2) aufnimmt, und
wobei die elektronische Steuereinrichtung (6) die Kamera (4) und/oder die Fördereinheit steuert und die Auswerteeinrichtung (7) die aufgenommenen Bilder auswertet,
**dadurch gekennzeichnet,**
**dass** die Kamera (4) mehrere Bilder in unterschiedlichen Beleuchtungssituationen des Artikels (2) nacheinander aufnimmt, und die elektronische Steuereinrichtung (6) die mehreren Lichtquellen (3) unabhängig voneinander steuert, um die unterschiedlichen Beleuchtungssituationen des keramischen Artikels (2) zu erzeugen.

2. Verfahren zur optischen Detektion von Fehlern in keramischen Artikeln (2) nach Anspruch 1,
**dadurch gekennzeichnet,**
**dass** die Lichtquellen (3) den keramischen Artikel (2) telezentrisch und/oder diffus beleuchten.

3. Verfahren zur optischen Detektion von Fehlern in keramischen Artikeln (2) nach Anspruch 1 oder 2,
**dadurch gekennzeichnet,**
**dass** die Lichtquellen (3) den keramischen Artikel (2) von oben und/oder unten und/oder den Seiten beleuchten.

4. Verfahren zur optischen Detektion von Fehlern in keramischen Artikeln (2) nach einem der vorangehenden Ansprüche,
**dadurch gekennzeichnet,**
**dass** die Lichtquelle mehrere Zeilenmodule umfasst, welche austauschbar an einem Rahmen gehaltert sind und wobei ein Zeilenmodul eine Vielzahl nebeneinander in einer Reihe oder in zwei parallelen Reihen angeordnete Strahlungsquellen (9), vorzugsweise LEDs oder Gasentladungslampen, aufweist.

5. Verfahren zur optischen Detektion von Fehlern in keramischen Artikeln (2) nach einem der vorangehenden Ansprüche,
**dadurch gekennzeichnet,**
**dass** ein Zeilenmodul in zwei Linien oder Reihen nebeneinander angeordnete Strahlungsquellen (9), vorzugsweise LEDs, umfasst, wobei die zwei Linien oder Reihen zueinander jeweils um den halben Durchmesser einer Strahlungsquelle (9) versetzt sind.

6. Verfahren zur optischen Detektion von Fehlern in keramischen Artikeln (2) nach einem der vorangehenden Ansprüche,
**dadurch gekennzeichnet,**
**dass** mindestens 4 oder 6 telezentrisch Lichtquellen (3) den keramischen Artikel unabhängig voneinander oder zusammen beleuchten, und/oder dass mindestens 9 oder 18 oder 27 oder 36 diffuse Lichtquellen (3) unabhängig voneinander oder zusammen beleuchten, und/oder
**dass** der Zeilenerfassungsbereich der Kamera (4) kleiner gleich 300 µm, vorzugsweise kleiner gleich 200 µm, höchst vorzugsweise kleiner gleich 150 µm beträgt.

7. Verfahren zur optischen Detektion von Fehlern in keramischen Artikeln (2) nach einem der vorangehenden Ansprüche,
**dadurch gekennzeichnet,**
**dass** bei der Bildaufnahme einer Zeile (9) in einer Aufnahmeserie mit mehreren Bildern diese in derselben Zeile (9) zeitlich nacheinander aufgenommen werden, wobei sich die einzelnen Bilder der Aufnahmeserie untereinander in der Beleuchtungssituation unterscheiden.

8. Verfahren zur optischen Detektion von Fehlern in keramischen Artikeln (2) nach Anspruch 7,
**dadurch gekennzeichnet,**
**dass** die mehreren Bilder einer Aufnahmeserie in einer Zeile (9) derart schnell nacheinander aufgenommen werden, dass der keramischen Artikel (2) in der für die Aufnahme all dieser mehreren Bilder notwendigen Zeitdauer um weniger als den Zeilenerfassungsbereich weitertransportiert wird.

9. Verfahren zur optischen Detektion von Fehlern in keramischen Artikeln (2) nach Anspruch 7 oder 8,
**dadurch gekennzeichnet,**
**dass** eine Aufnahmeserie mindestens 2 Bilder umfasst, vorzugsweise mindestens 15 Bilder oder mindestens 30 Bilder umfasst, und/oder dass zur Aufnahme der Aufnahmeserie einer Zeile (9) die Lichtquellen (3) synchron zu den mehreren Bildern der Aufnahmeserie sequentiell geschaltet werden, um den keramischen Artikel (2) derart zu beleuchten, dass je Bild der Aufnahmeserie eine unterschiedliche Beleuchtungssituation erzeugt wird.

10. Verfahren zur optischen Detektion von Fehlern in keramischen Artikeln (2) nach einem der Ansprüche 7 bis 9,
**dadurch gekennzeichnet,**
**dass** mehrere Zeilen (9) aufeinanderfolgend aufgenommen werden, um den gesamten keramischen Artikel (2) aufzunehmen, oder
**dass** mehrere Zeilen (9) und für jede Zeile (9) die Aufnahmeserie aufeinanderfolgend aufgenommen wird, um den gesamten keramischen Artikel (2) in unterschiedlichen Beleuchtungssituationen aufzunehmen, wobei vorzugsweise vorgesehen ist,
**dass** die Aufnahme durchgehend erfolgt, wobei für einen zu prüfenden Artikel eine Gruppe von Bildern oder ein Array an Bildern ausgegeben oder ausgelesen wird, wobei vorzugsweise jedem Bild einer Gruppe oder eines Arrays jeweils eine eigene Beleuchtungssituation zugrunde liegt.

11. Verfahren zur optischen Detektion von Fehlern in keramischen Artikeln (2) nach einem der Ansprüche 7 bis 10,
**dadurch gekennzeichnet,**
**dass** die durchgehende Aufnahme erfolgt, so lange der zu prüfende Artikel im Aufnahmebereich angeordnet ist, vorzugsweise startet und/oder endet die Aufnahme durch einen Sensor, vorzugsweise eine Lichtschranke.

12. Verfahren zur optischen Detektion von Fehlern in keramischen Artikeln (2) nach einem der Ansprüche 7 bis 11,
**dadurch gekennzeichnet,**
**dass** die Auswerteeinrichtung (7) aus den mehreren Zeilen (9) des gesamten keramischen Artikels (2) ein Gesamtbild zusammensetzt, um Fehler im keramischen Artikel (2) zu erkennen, und/oder
**dass** die Auswerteeinrichtung (7) für jede Beleuchtungssituation der Aufnahmeserie aus den mehreren Zeilen (9) des gesamten keramischen Artikels (2) mehrere Gesamtbilder mit jeweils unterschiedlichen Beleuchtungssituationen zusammensetzt, vorzugsweise jeweils ein Gesamtbild für jede Beleuchtungssituation zusammensetzt, und dass die Auswerteeinrichtung (7) anschließend eines oder mehrere oder alle der Gesamtbilder mit unterschiedlichen Beleuchtungssituationen auswertet und/oder miteinander vergleicht, um Fehler im keramischen Artikel (2) zu detektieren.

13. Verfahren zur optischen Detektion von Fehlern in keramischen Artikeln (2) nach einem der vorangehenden Ansprüche,
**dadurch gekennzeichnet,**
**dass** die detektierten Fehler in einem Speicher erfasst und/oder optisch angezeigt werden, und/oder
**dass** als fehlerhaft erkannte keramische Artikel (2) aus dem Förderstrom des Fördereinheit (5) ausgeschleust werden, oder die keramischen Artikel (2) entsprechend des detektierten Fehlers sortiert werden.

14. Verfahren zur optischen Detektion von Fehlern in keramischen Artikeln (2) nach einem der vorangehenden Ansprüche,
**dadurch gekennzeichnet,**
**dass** die Auswerteeinrichtung (7) mit einem Gesamtbild des keramischen Artikels (2) eine Kantendetektion durchführt, vorzugsweise durch einen Kantenfilter oder Kantendetektor, um Fehler im keramischen Artikel (2) zu erkennen, und/oder
**dass** die Auswerteeinrichtung (7) für jedes der Gesamtbilder mit jeweils unterschiedlicher Beleuchtungssituation, vorzugsweise unterschiedlicher diffuser Beleuchtungssituation, eine Kantendetektion durchführt und diese anschließend miteinander vergleicht, um Fehler im keramischen Artikel (2) zu erkennen und/oder um Reflexionen auf den Bildern des keramischen Artikels (2) zu eliminieren.

15. Verfahren zur optischen Detektion von Fehlern in keramischen Artikeln (2) nach einem der vorangehenden Ansprüche,
**dadurch gekennzeichnet,**
**dass** die Auswerteeinrichtung (7) die Gesamtbilder von unterschiedlichen Beleuchtungssituationen miteinander vergleicht, um Fehler im keramischen Artikel (2) zu erkennen, vorzugsweise
**dass** die Auswerteeinrichtung (7) gespeicherte Gesamtbilder eines fehlerfreien keramischen Artikels (2) mit den erfassten Gesamtbildern des zu prüfenden Artikels (2) vergleicht, um Fehler im keramischen Artikel (2) zu erkennen.
